# EUROPÄISCHE PATENTSCHRIFT

(11) **EP 3 545 603 B1**
(45) Veröffentlichungstag und Bekanntmachung des Hinweises auf die Patenterteilung: **01.09.2021**
(21) Anmeldenummer: 17801444.5
(22) Anmeldetag: 20.11.2017
(51) Int. Cl.: H01M 50/258, H02J 7/00, H02J 1/08, H01M 10/42, H01M 10/04, B60L 58/19, H02J 1/00, H01M 10/44, B60L 7/10, H02J 7/14

(54) **ZWEISPANNUNGSBATTERIE**
TWO-VOLTAGE BATTERY
BATTERIE BITENSIONS

(30) Priorität: 22.11.2016 DE 102016122444
(43) Veröffentlichungstag der Anmeldung: 02.10.2019
(73) Patentinhaber: HELLA GmbH & Co. KGaA, 59552 Lippstadt (DE)
(72) Erfinder: KAHNT, Sebastian, 91058 Erlangen (DE); KÖRNER, André, 59557 Lippstadt (DE)
(86) Internationale Anmeldenummer: PCT/EP2017/079729
(87) Internationale Veröffentlichungsnummer: WO 2018/095844

(56) Entgegenhaltungen:
- EP-A1- 2 688 179
- WO-A1-2011/002482
- DE-A1- 10 055 531
- DE-A1-102013 113 182
- DE-A1-102015 104 293
- JP-A- H08 322 103

## Beschreibung

Die Erfindung eine Zweispannungsbatterie für ein Fahrzeug umfassend eine Mehrzahl von Batteriezellen, wobei jeweils eine Gruppe von Batteriezellen zu einem Batteriezellblock verbunden ist, und umfassend eine Batterieelektronik mit einer Mehrzahl von Leistungsschaltelementen zum seriellen und/oder parallelen Verbinden jedenfalls einzelner Batteriezellblöcke, wobei in einer ersten Verbindungsanordnung der Batteriezellblöcke eine erste Spannung und wobei in einer zweiten Verbindungsanordnung der Batteriezellblöcke eine zweite Spannung bereitgestellt ist.

Eine gattungsgemäße Zweispannungsbatterie ist aus der DE 10 2013 113 182 A1 und aus dem Dokument DE 10 2015 104 293 A1 bekannt. Die bekannte Zweispannungsbatterie ist so aufgebaut, dass in einem Zweispannungsbordnetz mittels der Batterie eine erste Gruppe von elektrischen Verbrauchern bei einer ersten, von der Zweispannungsbatterie zur Verfügung gestellten Spannung betrieben werden kann und dass eine zweite Gruppe von elektrischen Verbrauchern bei einer zweiten, ebenfalls von der Zweispannungsbatterie zur Verfügung gestellten Spannung betrieben werden kann. Beispielsweise dient die Zweispannungsbatterie der Energieversorgung für ein 12 V-Bordnetz und für ein 48 V-Bordnetz des Fahrzeugs. Die zwei Spannungen können in einer Zweispannungsbatterie insbesondere gleichzeitig über verschiedene Anschlusspunkte zur Verfügung gestellt werden. Die zweiteilige Form des Anspruchs 1 basiert auf der DE 10 2015104 293 A1.

Aufgabe der vorliegenden Erfindung ist es, die Zweispannungsbatterie mit möglichst geringem Aufwand elektrisch redundant so auszuführen, dass ein Ausfall einzelner Batteriezellblöcke nicht zu einem kritischen Betriebszustand des Fahrzeugs führt und insbesondere sicherheitsrelevante elektrische Verbraucher von der erfindungsgemäßen Zweispannungsbatterie redundant versorgt werden können. Zugleich soll es möglich sein, Teilbordnetze oder Teilbereiche des Bordnetzes unabhängig voneinander versorgen zu können.

Zur Lösung der Aufgabe wird eine Zweikreisbatterie mit den Merkmalen des Anspruchs 1 vorgeschlagen.

Der besondere Vorteil der Erfindung besteht u.a. darin, dass von der erfindungsgemäßen Zweispannungsbatterie die zwei Spannungen gleichzeitig und redundant zur Verfügung gestellt werden. Die redundante Bereitstellung ermöglicht es, eine hohe Versorgungssicherheit für die Bordnetze des Fahrzeugs zu bewirken und sicherheitskritischen Fahrzuständen entgegenzuwirken, welche beispielsweise durch den Ausfall von elektrischen Verbrauchern auftreten können. Die Redundanz wird erreicht, indem die Batteriezellblöcke der Zweispannungsbatterie intern zwei Subenergiemodule bilden, von denen jeweils die erste Spannung und die zweite Spannung bereitgestellt werden können mit der Folge, dass die elektrischen Verbraucher in einem kritischen Betriebszustand wahlweise von einem der zwei Subenergiemodule versorgt werden können. Ein Defekt in einem der zwei Subenergiemodule führt demzufolge nicht zu einem Ausfall kritischer elektrischer Verbraucher.

Innerhalb der zwei Subenergiemodule sind erfindungsgemäß je zwei Spannungsversorgungseinheiten vorgesehen, welche die erste Spannung und/oder die zweite Spannung bereitstellen. Die Spannungen stehen jeweils an getrennten Anschlusspunkten der Zweispannungsbatterie zur Verfügung, wobei zwei Anschlusspunkte für die erste Spannung und zwei weitere Anschlusspunkte für die zweite Spannung vorgesehen sind.

Das erste Subenergiemodul und das zweite Subenergiemodul sind über eine erste Leitung und eine zweite Leitung verbunden. Der ersten Leitung ist ein erster Modultrennschalter und der zweiten Leitung ein zweiter Modultrennschalter zugeordnet, wobei über den ersten Modultrennschalter die zur Bereitstellung der ersten Spannung vorgesehene erste Spannungsversorgungseinheit mit der zur Bereitstellung der ersten Spannung vorgesehenen zweiten Spannungsversorgungseinheit zusammenwirken und über den zweiten Modultrennschalter die zur Bereitstellung der zweiten Spannung vorgesehene dritte Spannungsversorgungseinheit und die ebenfalls zur Bereitstellung der zweiten Spannung vorgesehene vierte Spannungsversorgungseinheit gekoppelt sind. Jeder Modultrennschalter kann erfindungsgemäß in eine Öffnungsstellung und eine Schließstellung verbracht werden, wobei in einem Normalbetriebszustand der erste Modultrennschalter und der zweite Modultrennschalter geschlossen sind zum Verbinden der Subenergiemodule und wobei in einem Notbetriebszustand der Zweispannungsbatterie, der vorliegt, wenn in einem Teilbereich des Bordnetzes ein Fehler auftritt oder eine Spannungsversorgungseinheit der Zweispannungsbatterie ausfällt, wenigstens ein Modultrennschalter geöffnet ist zum Trennen der defekten Spannungsversorgungseinheit. Vorteilhaft kann durch das Vorsehen der Modultrennschalter die Konfiguration der Zweispannungsbatterie aktiv geändert und die Versorgung der elektrischen Verbraucher wahlweise über das erste Subenergiemodul oder das zweite Subenergiemodul oder beide Subenergiemodule realisiert werden.

Optional kann der Aufbau der Zweispannungsbatterie weiter vereinfacht werden, indem die Massepunkte der beiden Subenergiemodule zusammengefasst werden, indem für die vier Spannungsversorgungseinheiten ein gemeinsamer erster Anschlusspunkt bereitgestellt wird für die erste Spannung und/oder indem für die dritte Spannungsversorgungseinheit und die vierte Spannungsversorgungseinheit ein gemeinsamer Anschlusspunkt für die zweite Spannung vorgesehen wird.

Nach einer Weiterbildung der Erfindung umfassen die erste Spannungsversorgungseinheit und die zweite Spannungsversorgungseinheit genau je einen Batteriezellblock. Beispielsweise wird durch den einen Batteriezellblock der ersten Spannungsversorgungseinheit und durch den einen Batteriezellblock der zweiten Spannungsversorgungseinheit eine erste Spannung von 12 V zur Verfügung gestellt für ein 12 V-Bordnetz des Fahrzeugs. Es werden insofern bei 12 V betriebene Verbraucher im Bordnetz des Fahrzeugs über die erste Spannungsversorgungseinheit und/oder die zweite Spannungsversorgungseinheit mit Energie versorgt. Vorteilhaft ist die Realisierung der ersten Spannungsversorgungseinheit und der zweiten Spannungsversorgungseinheit mit einem einzigen Batteriezellblock konstruktiv sehr einfach und kostengünstig. Überdies ist der Bauraumbedarf für den einen Batteriezellblock vergleichsweise gering mit der Folge, dass eine Integration in dem typischerweise begrenzten Bauraum des Fahrzeugs vergleichsweise einfach möglich ist.

Nach einer Weiterbildung der Erfindung umfassen die dritte Spannungsversorgungseinheit und die vierte Spannungsversorgungseinheit drei oder mehr Batteriezellblöcke, welche mit Hilfe der Leistungsschaltelemente wahlweise parallel oder in Reihe verschaltet werden. Mittels der dritten Spannungsversorgungseinheit und der vierten Spannungsversorgungseinheit wird dann beispielsweise nominell eine 48 V Spannung als zweite Spannung bereitgestellt, wenn die erste Spannungsversorgungseinheit und/oder die zweite Spannungsversorgungseinheit nominell die 12 V Spannung bereitstellen.

Nach einer Weiterbildung der Erfindung sind alle Batteriezellblöcke der Zweispannungsbatterie baugleich ausgeführt. Vorteilhaft ist die konstruktive Gestaltung der Zweispannungsbatterie in der redundanten Ausführung nach der Erfindung konstruktiv besonders einfach, wenn baugleiche Batteriezellblöcke für alle Spannungsversorgungseinheiten verwendet werden. Die Verwendung von Gleichteilen etwa im Bereich der Leistungsschaltelemente reduziert überdies die Kosten für die Zweispannungsbatterie weiter.

Nach einer Weiterbildung der Erfindung sind für das erste Subenergiemodul und für das zweite Subenergiemodul der Zweispannungsbatterie getrennte Gehäuse vorgesehen. Vorteilhaft kann durch das Vorsehen getrennter Gehäuse für die Subenergiemodule die Zweispannungsbatterie im Fahrzeug verteilt angeordnet werden. Es ergibt sich hierdurch eine erhöhte Sicherheit beispielsweise bei Unfällen, bei denen das Fahrzeug entweder im Front- oder im Heckbereich beschädigt wird. Die Verbindung der Subenergiemodule erfolgt hierüber insbesondere über die erste Leitung mit dem ersten Modultrennschalter und die zweite Leitung mit dem zweiten Modultrennschalter, wobei die Modultrennschalter bevorzugt außerhalb der Gehäuse der Subenergiemodule angeordnet sind. Es kann erfindungsgemäß vorgesehen sein, dass an dem Gehäuse des ersten Subenergiemoduls der erste Anschlusspunkt für die erste Spannung und der dritte Anschlusspunkt für die zweite Spannung realisiert sind und dass an dem Gehäuse des zweiten Subenergiemoduls der zweite Anschlusspunkt für die erste Spannung und der vierte Anschlusspunkt für die zweite Spannung realisiert sind.

Nach einer alternativen Ausführungsform der Erfindung kann ein gemeinsames Gehäuse für die Subenergiemodule der Zweispannungsbatterie vorgesehen sein. Durch die Verwendung eines gemeinsamen Gehäuses kann die Zweispannungsbatterie sehr kompakt aufgebaut werden und einfach zu handhaben sein. Die Modultrennschalter können innerhalb und außerhalb des Gehäuses vorgesehen werden oder es kann auf die Modultrennschalter verzichtet werden.

Nach einer Weiterbildung der Erfindung sind für die Subenergiemodule getrennte Massepunkte vorgesehen. Vorteilhaft verbessert sich die Versorgungssicherheit durch das Vorsehen getrennter Massepunkte für die Subenergiemodule weiter.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigt:
- Fig. 1: eine erste Konfiguration einer erfindungsgemäßen Zweispannungsbatterie mit einem ersten Subenergiemodul und einem zweiten Subenergiemodul sowie einem gemeinsamen Gehäuse für die zwei Subenergiemodule,
- Fig. 2: eine Prinzipdarstellung für die Anordnung der Zweispannungsbatterie nach Fig. 1 in einem Fahrzeug,
- Fig. 3: eine zweite Konfiguration der erfindungsgemäßen Zweispannungsbatterie, wobei die Subenergiemodule hierbei in getrennten Gehäusen angeordnet sind,
- Fig. 4: eine dritte Konfiguration der erfindungsgemäßen Zweispannungsbatterie mit Sicherungstrennschaltern und
- Fig. 5: eine vierte Konfiguration der erfindungsgemäßen Zweispannungsbatterie.

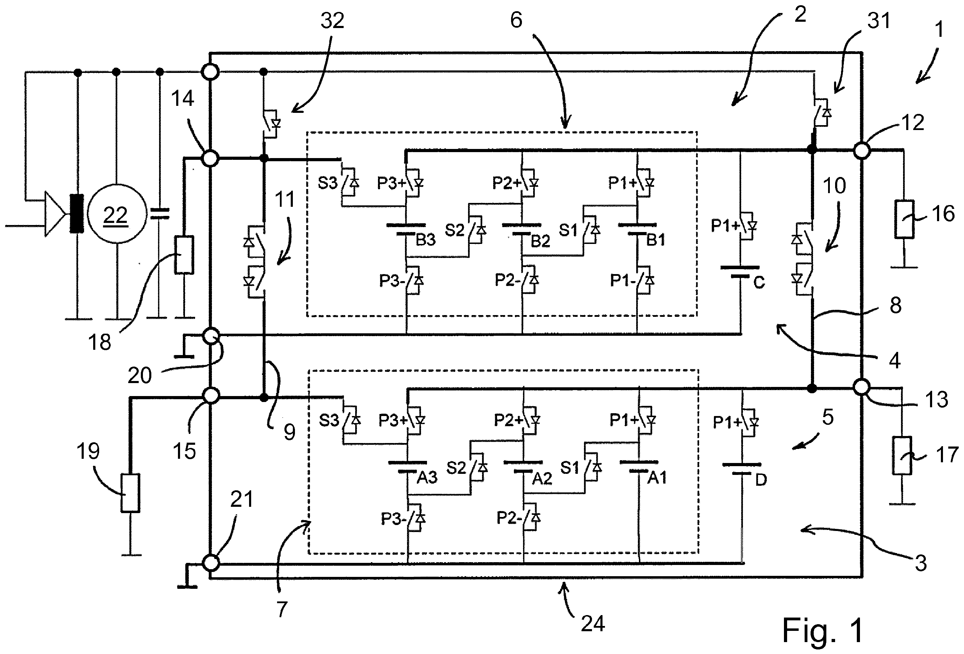

Eine erfindungsgemäße Zweispannungsbatterie 1 nach Fig. 1 umfasst ein erstes Subenergiemodul 2 sowie ein zweites Subenergiemodul 3 mit jeweils vier Batteriezellblöcken A1, A2, A3, B1, B2, B3, C, D. Es sind hierbei ein erster Batteriezellblock C als Teil einer ersten Spannungsversorgungseinheit 4 und ein zweiter Batteriezellblock D als Teil einer zweiten Spannungsversorgungseinheit 5 vorgesehen. Weiter sind drei dritte Batteriezellblöcke B1, B2, B3 als Teil einer dritten Spannungsversorgungseinheit 6 sowie drei vierte Batteriezellblöcke A1, A2, A3 als Teil einer vierten Spannungsversorgungseinheit 7 angeordnet. Die erste Spannungsversorgungseinheit 4 sowie die dritte Spannungsversorgungseinheit 6 mit den Batteriezellblöcken B1, B2, B3, C sind Teil des ersten Subenergiemoduls 2 und die zweite Spannungsversorgungseinheit 5 sowie die vierte Spannungsversorgungseinheit 7 mit den Batteriezellblöcken A1, A2, A3, D Teil des zweiten Subenergiemoduls 3.

Jeweils ist dem ersten Batteriezellblock C und dem zweiten Batteriezellblock D ein Leistungsschaltelement P1+ zugeordnet zum parallelen Verbinden des Batteriezellblocks C, D. Ferner sind den Batteriezellblöcken A1, A2, A3, B1, B2, B3 der dritten Spannungsversorgungseinheit 6 und der vierten Spannungsversorgungseinheit 7 weitere Leistungsschaltelemente P1+, P1-, P2+, P2-, P3+, P3-, S1, S2, S3 zugeordnet, welche ausgebildet und angeordnet sind zum parallelen Verbinden der dritten Batteriezellblöcke B1, B2, B3 und/oder der vierten Batteriezellblöcke A1, A2, A3 in einer ersten Verbindungsanordnung derselben beziehungsweise zum seriellen Verbinden der dritten Batteriezellblöcke B1, B2, B3 und/oder der vierten Batteriezellblöcke A1, A2, A3 in einer zweiten Verbindungsanordnung.

Das erste Subenergiemodul 2 der Zweispannungsbatterie 1 mit der ersten Spannungsversorgungseinheit 4 und der dritten Spannungsversorgungseinheit 6 ist über eine erste Leitung 8 sowie eine zweite Leitung 9 mit dem zweiten Subenergiemodul 3 verbunden. Der ersten Leitung 8 ist ein erster Modultrennschalter 10 und der zweiten Leitung 9 ein zweiter Modultrennschalter 11 zugeordnet. Ferner sieht das erste Subenergiemodul 2 einen ersten Anschlusspunkt 12 sowie das zweite Subenergiemodul 3 einen zweiten Anschlusspunkt 13 vor, über den jeweils die erste Spannung bereitgestellt ist. Weiter sieht das erste Subenergiemodul 2 einen dritten Anschlusspunkt 14 und das zweite Subenergiemodul 3 einen vierten Anschlusspunkt 15 vor. Über den dritten Anschlusspunkt 14 und den vierten Anschlusspunkt 15 wird die zweite Spannung bereitgestellt.

Über den ersten Anschlusspunkt 12 der Zweispannungsbatterie ist eine Gruppe von ersten elektrischen Verbrauchern 16 und über den zweiten Anschlusspunkt 13 eine Gruppe von zweiten elektrischen Verbrauchern 17 angeschlossen. Jeweils werden die ersten elektrischen Verbraucher 16 und die zweiten elektrischen Verbraucher 17 bei der ersten Spannung betrieben. In analoger Weise ist über den dritten Anschlusspunkt 14 eine Gruppe von dritten elektrischen Verbrauchern 18 und über den vierten Anschlusspunkt 15 eine Gruppe von vierten elektrischen Verbrauchern 19 angeschlossen, welche bei der zweiten Spannung betrieben werden.

Die Subenergiemodule 2, 3 der Zweispannungsbatterie 1 verfügen in der dargestellten Ausführungsform der Erfindung über getrennte Massepunkte 20, 21. Es ist hierbei dem ersten Subenergiemodul 2 mit der ersten Spannungsversorgungseinheit 4 und der dritten Spannungsversorgungseinheit 6 ein erster Massepunkt 20 und dem zweiten Subenergiemodul 3 mit der zweiten Spannungsversorgungseinheit 5 und der vierten Spannungsversorgungseinheit 7 ein zweiter Massepunkt 21 zugeordnet, welche zueinander beabstandet an einem Gehäuse 24 vorgesehen sind.

Der Zweispannungsbatterie 1 ist des Weiteren beispielhaft ein Starter-Generator 22 zugeordnet, der wahlweise von der Zweispannungsbatterie 1 an der zweiten Spannung und/oder der ersten Spannung mit Energie versorgt wird oder im generatorischen Betrieb elektrische Energie bei der ersten Spannung und/oder der zweiten Spannung in die Zweispannungsbatterie 1 lädt. Beispielsweise ist der Starter-Generator 22 ausgebildet für die Energierückgewinnung beim Bremsen des Fahrzeugs oder in anderen Schubphasen eines Verbrennungsmotors des Fahrzeugs.

Der Starter-Generator 22 kann zum Betrieb an der ersten Spannung über einen ersten Generatorschalter 31 verbunden werden. In analoger Weise kann der Starter-Generator 22 über einen zweiten Generatorschalter 32 verbunden und an der zweiten Spannung der Zweispannungsbatterie 1 betrieben werden.

Erfindungsgemäß ist die Zweispannungsbatterie 1 in Bezug auf die zwei Bordnetzspannungen vollständig redundant ausgeführt. Die diversen elektrischen Verbraucher 16, 17, 18, 19 können entweder von dem ersten Subenergiemodul 2 oder von dem zweiten Subenergiemodul 3 oder von beiden Subenergiemodulen 2, 3 gemeinsam mit elektrischer Energie versorgt werden. Es ergibt sich hierdurch eine hohe Versorgungssicherheit für die elektrischen Verbraucher 16, 17, 18, 19 und es ist insbesondere sichergestellt, dass sicherheitskritische elektrische Verbraucher auch dann mit elektrischer Energie versorgt werden, wenn einzelne Batteriezellblöcke A1, A2, A3, B1, B2, B3, C, D der Zweispannungsbatterie 1 ausfallen.

Beispielsweise kann durch einen Defekt des erstens Batteriezellblocks C die Versorgung der ersten elektrischen Verbraucher 16 und der zweiten elektrischen Verbraucher 17 durch das erste Subenergiemodul 2 beziehungsweise die erste Spannungsversorgungseinheit 4 unterbrochen sein. In diesem Fall kann der erste Modultrennschalter 10 in Kombination mit dem Leistungsschaltelement P1+ des ersten Batteriezellblocks C so verschaltet werden, dass die ersten elektrischen Verbraucher 16 und die zweiten elektrischen Verbraucher 17 von dem zweiten Batteriezellblock D des zweiten Subenergiemoduls 3 mit Energie versorgt werden. In ähnlicher Weise kann bei einem Defekt der vierten Spannungsversorgungseinheit 7 die Versorgung der dritten elektrischen Verbraucher 18 beziehungsweise der vierten elektrischen Verbraucher 19 über das erste Subenergiemodul 2 und dort durch die dritte Spannungsversorgungseinheit 6 realisiert werden. Es wird hierzu die Verbindung zu der vierten Spannungsversorgungseinheit 7 unterbrochen und der zweite Modultrennschalter 11 so geschaltet, dass die vierten elektrischen Verbraucher 19 über das erste Subenergiemodul 2 bei der zweiten Spannung mit elektrischer Energie versorgt werden.

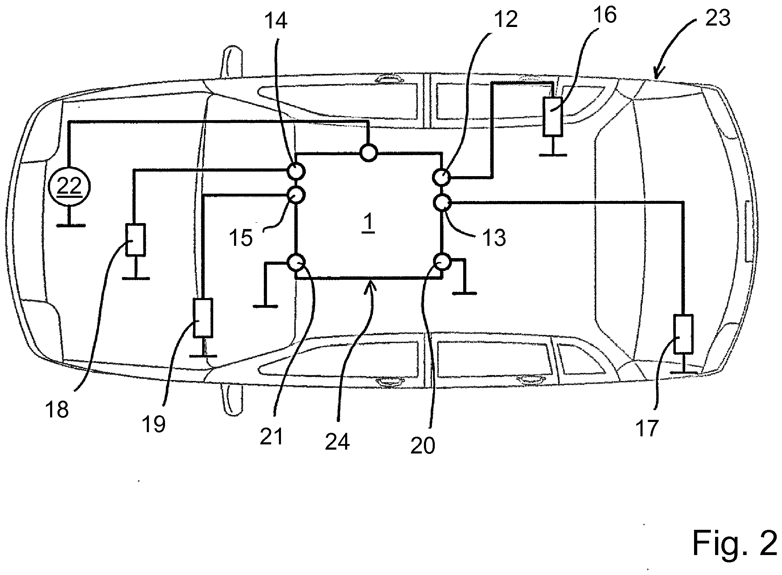

Fig. 2 zeigt die prinzipielle Integration der Zweispannungsbatterie 1 nach Fig. 1 in ein Fahrzeug 23. Die Zweispannungsbatterie 1 weist hier das gemeinsame Gehäuse 24 auf. An dem Gehäuse 24 sind die vier Anschlusspunkte 12, 13, 14, 15 der Zweispannungsbatterie 1 sowie der erste Massepunkt 20 und der zweite Massepunkt 21 vorgesehen. Die diversen elektrischen Verbraucher 16, 17, 18, 19, welche verteilt in dem Fahrzeug 23 angeordnet sind, werden redundant von der Zweispannungsbatterie 1 mit elektrischer Energie betrieben.

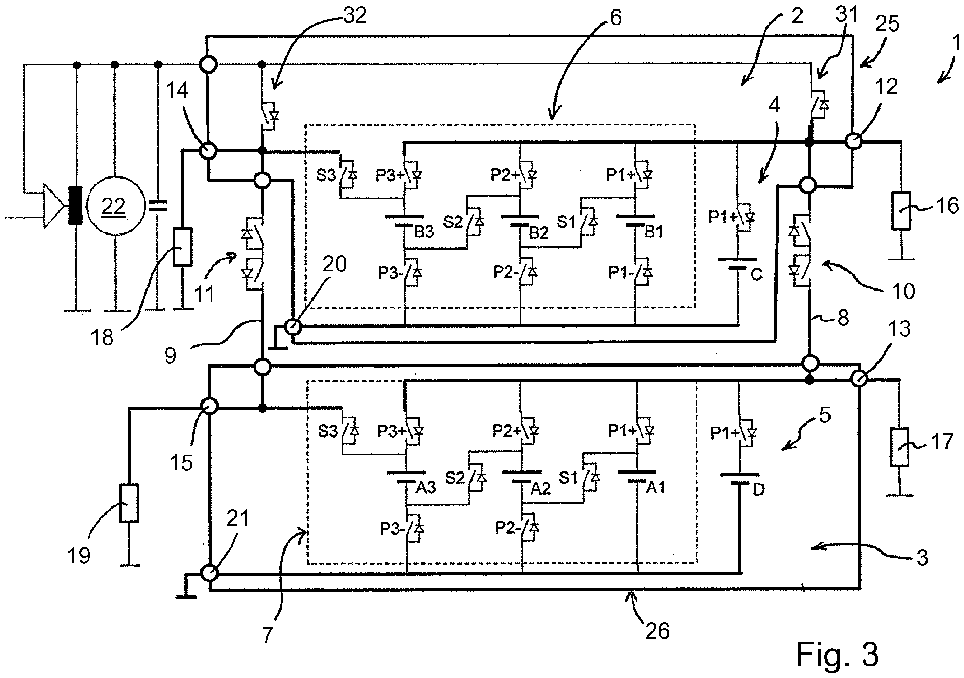

Während die Zweispannungsbatterie 1 nach den Fig. 1 und 2 ein gemeinsames Gehäuse 24 für das erste Subenergiemodul 2 und das zweite Subenergiemodul 3 vorsieht, ist die Zweispannungsbatterie 1 in einer zweiten Konfiguration nach Fig. 3 modifiziert so gestaltet, dass ein erstes Gehäuse 25 für das erste Subenergiemodul 2 und ein zweites Gehäuse 26 für das zweite Subenergiemodul 3 vorgesehen ist. Zwischen den Gehäusen 25, 26 sind die erste Leitung 8 und die zweite Leitung 9 mit den Modultrennschaltern 10, 11 vorgesehen. Die erste Leitung 8 und die zweite Leitung 9 sowie die Modultrennschalter 10, 11 sind demzufolge außerhalb der Gehäuse 25, 26 der Zweispannungsbatterie 1 vorgesehen. Der weitere Aufbau der Zweispannungsbatterie 1 ist analog wie dargestellt realisiert.

Durch die Anordnung der Subenergiemodule 2, 3 in getrennten Gehäusen 25, 26 kann die redundante Energieversorgung für das Fahrzeug 23 weiter verbessert werden. Beispielsweise können die beiden Subenergiemodule 2, 3 mit den Gehäusen 25, 26 verteilt im Fahrzeug 23 angeordnet werden. Das erste Subenergiemodul 2 mit dem ersten Gehäuse 25 kann beispielsweise im Bereich eines Motorraums vorgesehen werden, wohingegen das zweite Subenergiemodul 3 mit dem zweiten Gehäuse 26 im Bereich einer Hinterachse des Fahrzeugs 23 angeordnet werden kann. Es ergibt sich hierdurch ein verbesserter Schutz vor einer Beschädigung und einem Totalausfall der Zweispannungsbatterie 1 etwa bei einem Unfall. Hier wird das Fahrzeug typischerweise nicht gleichzeitig im Bereich der Fahrzeugfront und in dem Heckbereich beschädigt, sodass stets eine elektrische Versorgung der diversen elektrischen Verbraucher 16, 17, 18, 19 bei der ersten Spannung und bei der zweiten Spannung aufrechterhalten werden kann. Sicherheitskritische Funktionen, beispielsweise die Betätigung elektrischer Türschlösser, können hier auch im Falle eines Unfalls zur Verfügung gestellt werden.

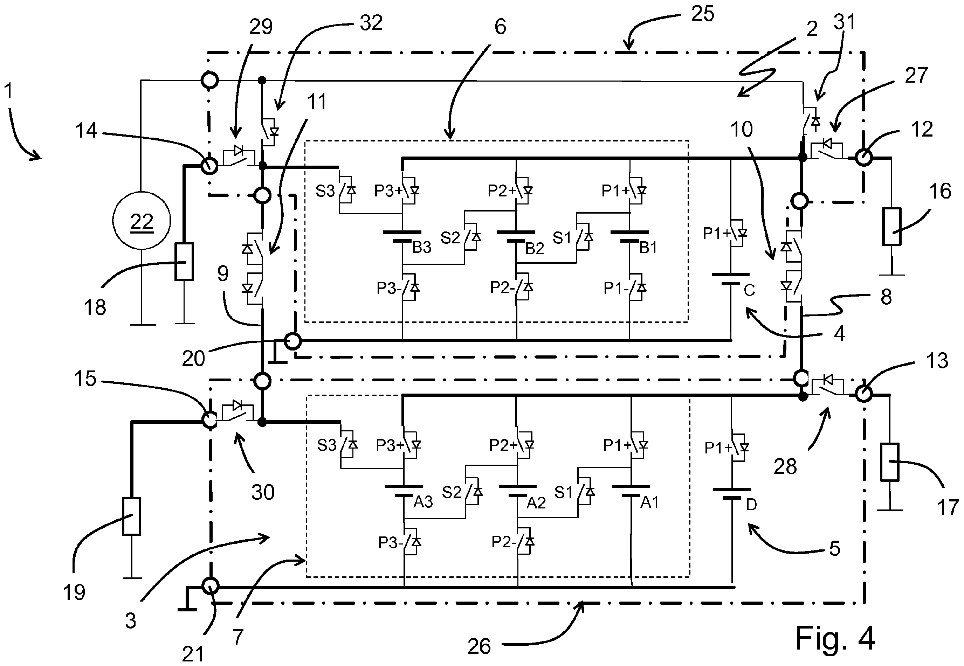

Nach einer dritten Konfiguration der Zweispannungsbatterie 1 gemäß Fig. 4 sind zur Absicherung gegen einen Fehler, insbesondere einen Kurzschluss, an einem der elektrischen Verbraucher 16, 17, 18, 19 Sicherungstrennschalter 27, 28, 29, 30 vorgesehen. Die Sicherungstrennschalter 27, 28, 29, 30 sind zwischen den Anschlusspunkten 12, 13, 14, 15 der Zweispannungsbatterie 1 und den Subenergiemodulen 2, 3 angeordnet. In einer Schließstellung der Sicherungstrennschalter 27, 28, 29, 30 sind die elektrischen Verbraucher 16, 17, 18, 19 mit den Subenergiemodulen 2, 3 verbunden und werden bei der ersten Spannung beziehungsweise bei der zweiten Spannung mit elektrischer Energie versorgt. In einer Öffnungsstellung der Sicherungstrennschalter 27, 28, 29, 30 werden die von dem Fehler betroffenen elektrischen Verbraucher 16, 17, 18, 19 beziehungsweise das an dem Anschlusspunkt 12, 13, 14, 15 angeschlossenen Teilbordnetz des Fahrzeugs von der Energieversorgung getrennt. Der Fehler in dem betroffenen Teilbordnetz wird insofern isoliert und die redundante Energieversorgung für alle anderen Teile des Bordnetzes bleibt erhalten. Ein Rückwirken des Fehlers in dem Teilbordnetz auf die Zweispannungsbatterie 1 kann ebenfalls verhindert werden mit der Folge, dass sich die Versorgungssicherheit für das Fahrzeug weiter verbessert.

Das Vorsehen der Sicherungstrennschalter 27, 28, 29, 30 für alle Anschlusspunkte 12, 13, 14, 15 ist in der vorstehend beschriebenen Konfiguration allein exemplarisch gewählt. Es kann alternativ vorgesehen sein, lediglich für einen einzelnen Anschlusspunkt 12, 13, 14, 15 oder eine Gruppe von Anschlusspunkten 12, 13, 14, 15 beziehungsweise die an diesen Anschlusspunkten 12, 13, 14, 15 angeschlossenen Teilbordnetze einen Sicherungstrennschalter 27, 28, 29, 30 vorzusehen, während andere Anschlusspunkte ohne Sicherungstrennschalter realisiert werden. Die Möglichkeit zur Isolation eines Fehlers besteht dann für alle Teilbordnetze mit zugeordneten Sicherungstrennschalter 27, 28, 29, 30.

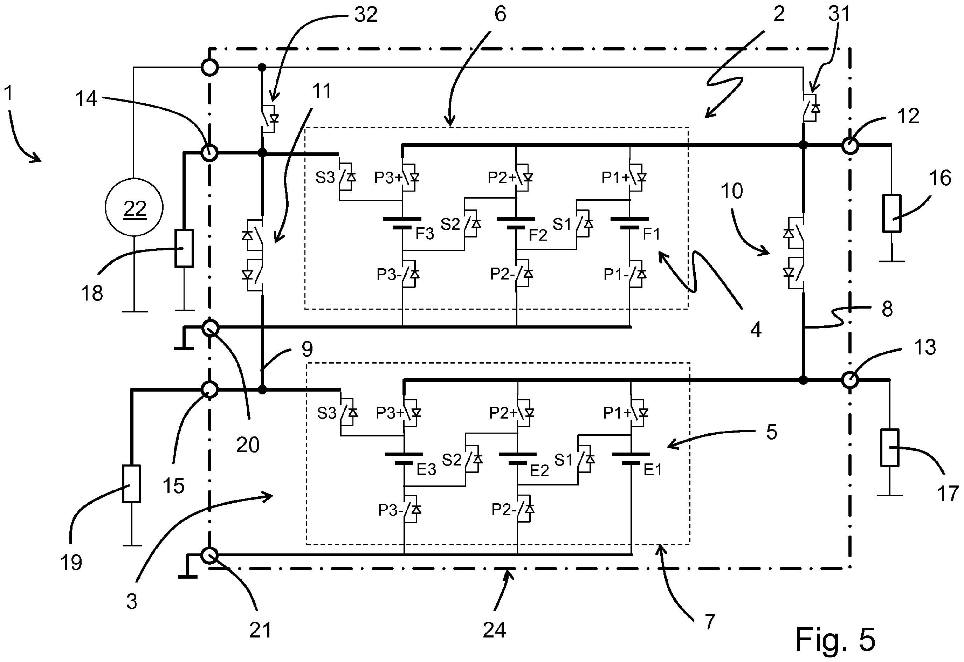

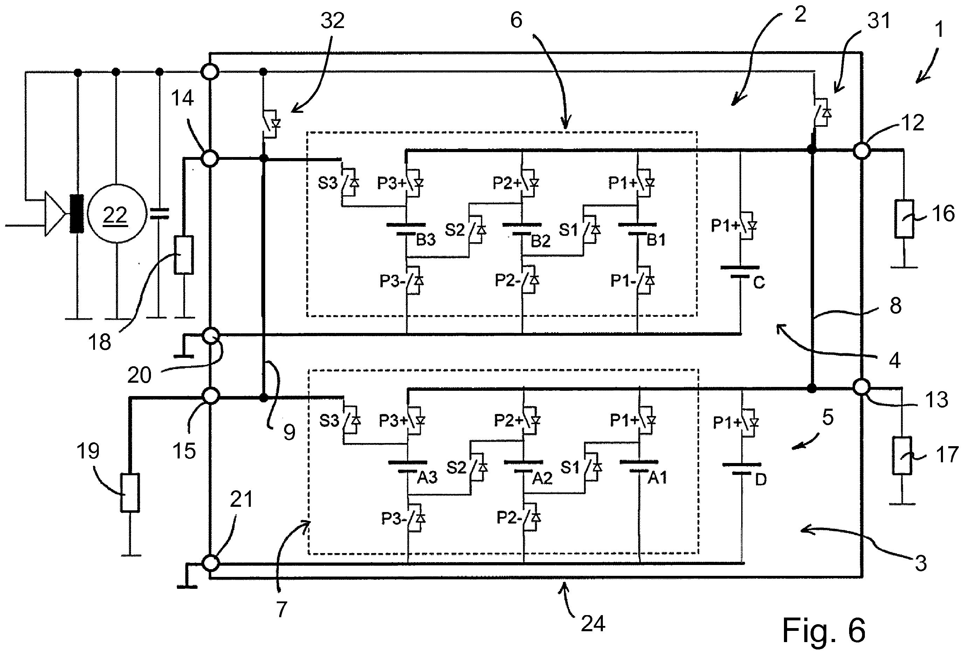

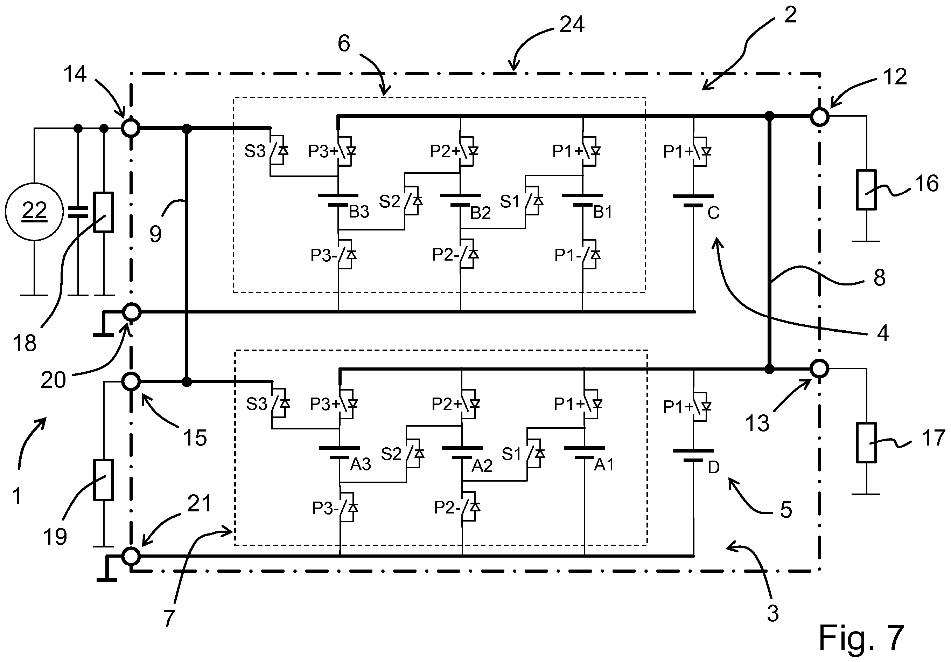

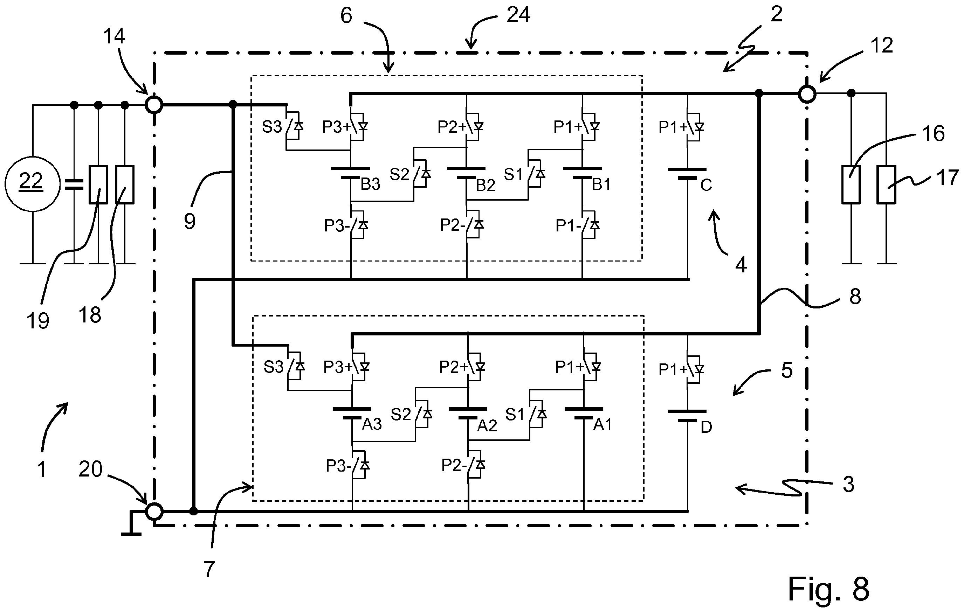

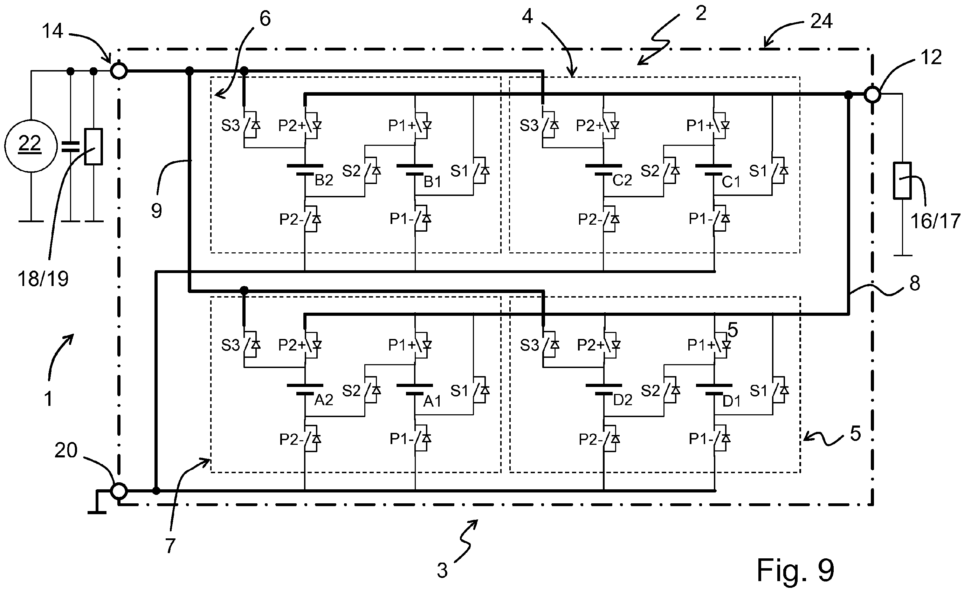

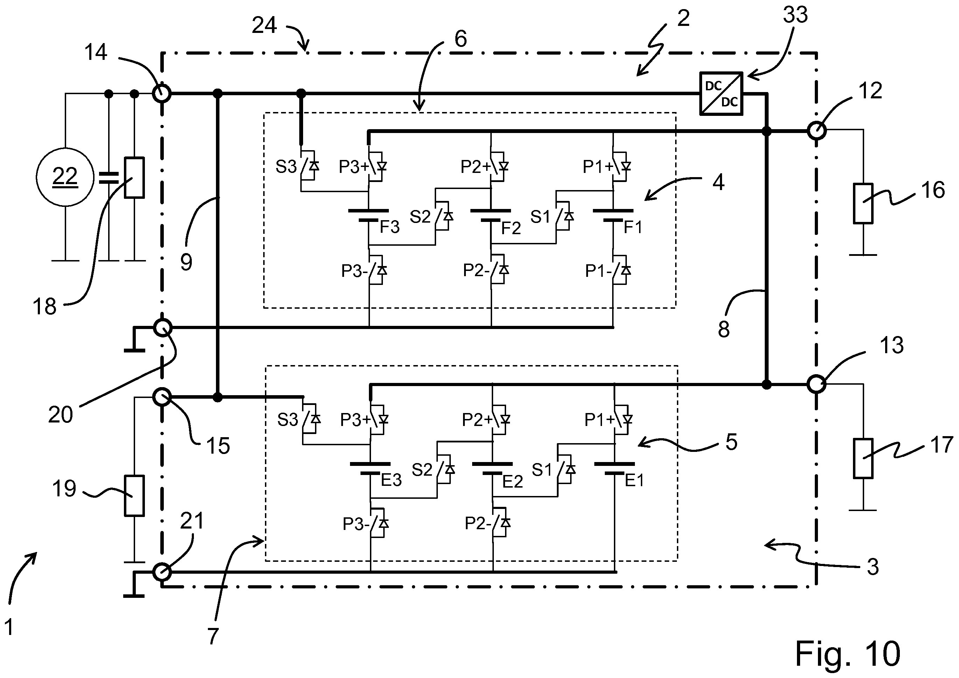

Nach einer vierten Konfiguration gemäß Fig. 5 weist die Zweispannungsbatterie 1 funktional integrierte Batteriezellblöcke E1, F1 auf, welche zugleich der ersten und der dritten Spannungsversorgungseinheit 4, 6 (Batteriezellblock F1) oder der zweiten und der vierten Spannungsversorgungseinheit 5, 7 (Batterieblock E1) zugeordnet sind. Über die funktional integrierten Batteriezellblöcke E1, F1 ist bei geschlossenen Leistungsschaltelement P1+ an dem ersten Anschlusspunkt 12 beziehungsweise an dem zweiten Anschlusspunkt 13 die erste Spannung bereitgestellt. Zugleich dienen die funktional integrierten Batteriezellblöcke E1, F1 zusammen mit den weiteren Batteriezellblöcken E2, E3, F2, F3 der dritten Spannungsversorgungseinheit 6 und der vierten Spannungsversorgungseinheit 7 in der seriellen Konfiguration der Batteriezellblöcke E1, E2, E3, F1, F2, F3 zum Bereitstellen der zweiten Spannung an dem dritten Anschlusspunkt 14 beziehungsweise dem vierten Anschlusspunkt 15. Ansonsten ist die vierte Konfiguration der Zweispannungsbatterie 1 zu der Zweispannungsbatterie 1 gemäß der ersten Konfiguration analog aufgebaut. Es ist beispielsweise ein gemeinsames Gehäuse 24 vorgesehen und auf Sicherungstrennschalter 27, 28, 29, 30 verzichtet.

Vorteilhaft ist die Zweispannungsbatterie in der vierten Konfiguration kostengünstig zu realisieren, Zudem ist sie durch ein geringes Volumen und eine geringe Komplexität gekennzeichnet, da jedes Subenergiemodul 2, 3, im dargestellten Fall nur drei Batteriezellblöcke E1, E2, E3, F1, F2, F3 aufweist. Im Fehlerfall ist die Redundanz bei der Energieversorgung gleichwohl gewährleistet, da selbst beim Ausfall von einem der beiden funktional integrierten Batteriezellblöcken E1, F1 alle elektrischen Verbraucher 16, 17, 18, 19 weiter mit Energie versorgt werden können.

Die Idee der funktional integrierten Batteriezellblöcke E1, F1 ist nicht auf die dargestellte Konfiguration der Zweispannungsbatterie 1 begrenzt. Es ist beispielsweise möglich, die Sicherungstrennschalter 27, 28, 29, 30 vorzusehen beziehungsweise getrennte Gehäuse 25, 26 für die Subenergiemodule 2, 3 zu realisieren.

Beispielsweise kann anstelle des Starter-Generators 22 oder optional zusätzlich ein DC-DC-Wandler vorhanden sein, welcher zwischen den zwei Spannungen der Zweispannungsbatterie vorgesehen ist und einen Austausch von Energie erlaubt.

Gleiche Bauteile und Bauteilfunktionen sind durch gleiche Bezugszeichen gekennzeichnet.

### Bezugszeichenliste

- 1: Zweispannungsbatterie
- 2: erstes Subenergiemodul
- 3: zweites Subenergiemodul
- 4: erste Spannungsversorgungseinheit
- 5: zweite Spannungsversorgungseinheit
- 6: dritte Spannungsversorgungseinheit
- 7: vierte Spannungsversorgungseinheit
- 8: erste Leitung
- 9: zweite Leitung
- 10: Modultrennschalter
- 11: Modultrennschalter
- 12: erster Anschlusspunkt
- 13: zweiter Anschlusspunkt
- 14: dritter Anschlusspunkt
- 15: vierter Anschlusspunkt
- 16: elektrischer Verbraucher
- 17: elektrischer Verbraucher
- 18: elektrischer Verbraucher
- 19: elektrischer Verbraucher
- 20: Massepunkt
- 21: Massepunkt
- 22: Starter-Generator
- 23: Fahrzeug
- 24: Gehäuse
- 25: Gehäuse
- 26: Gehäuse
- 27: Sicherungstrennschalter
- 28: Sicherungstrennschalter
- 29: Sicherungstrennschalter
- 30: Sicherungstrennschalter
- 31: Generatorschalter
- 32: Generatorschalter
- A1: Batteriezellblock
- A2: Batteriezellblock
- A3: Batteriezellblock
- B1: Batteriezellblock
- B2: Batteriezellblock
- B3: Batteriezellblock
- C: Batteriezellblock
- C1: Batteriezellblock
- C2: Batteriezellblock
- D: Batteriezellblock
- D1: Batteriezellblock
- D2: Batteriezellblock
- E1: Batteriezellblock
- E2: Batteriezellblock
- E3: Batteriezellblock
- F1: Batteriezellblock
- F2: Batteriezellblock
- F3: Batteriezellblock
- P1+: Leistungsschaltelement
- P1-: Leistungsschaltelement
- P2+: Leistungsschaltelement
- P2-: Leistungsschaltelement
- P3+: Leistungsschaltelement
- P3-: Leistungsschaltelement
- S1: Leistungsschaltelement
- S2: Leistungsschaltelement
- S3: Leistungsschaltelement

## Patentansprüche

1. Zweispannungsbatterie (1) für ein Fahrzeug (23)
• umfassend eine Mehrzahl von Batteriezellen, wobei jeweils eine Gruppe von Batteriezellen zu einem Batteriezellblock (A1, A2, A3, B1, B2, B3, C, C1, C2, D, D1, D2, E1, E2, E3, F1, F2, F3) verbunden ist, und
• umfassend eine Batterieelektronik mit einer Mehrzahl von Leistungsschaltelementen (P1+, P1-, P2+, P2-, P3+, P3-, S1, S2, S3) zum seriellen und/oder parallelen Verbinden jedenfalls einzelner Batteriezellblöcke (A1, A2, A3, B1, B2, B3, C, C1, C2, D, D1, D2, E1, E2, E3, F1, F2, F3),
• wobei in einer ersten Verbindungsanordnung der Batteriezellblöcke (A1, A2, A3, B1, B2, B3, C, C1, C2, D, D1, D2, E1, E2, E3, F1, F2, F3) eine erste Spannung und
• wobei in einer zweiten Verbindungsanordnung der Batteriezellblöcke (A1, A2, A3, B1, B2, B3, C, C1, C2, D, D1, D2, E1, E2, E3, F1, F2, F3) eine zweite Spannung bereitgestellt ist,
wobei
• wenigstens ein erster Batteriezellblock (C, C1, C2, F1) als Teil einer ersten Spannungsversorgungseinheit (4) und
• wenigstens ein zweiter Batteriezellblock (D, D1, D2, E1) als Teil einer zweiten Spannungsversorgungseinheit (5) und
• wenigstens zwei dritte Batteriezellblöcke (B1, B2, B3, F1, F2, F3) als Teil einer dritten Spannungsversorgungseinheit (6) und
• wenigstens zwei vierte Batteriezellblöcke (A1, A2, A3, E1, E2, E3) als Teil einer vierten Spannungsversorgungseinheit (7) vorgesehen sind,
wobei
• die erste Spannungsversorgungseinheit (4) und die dritte Spannungsversorgungseinheit (6) ein erstes Subenergiemodul (2) und
• die zweite Spannungsversorgungseinheit (5) und die vierte Spannungsversorgungseinheit (7) ein zweites Subenergiemodul (3) bilden und
wobei die Spannungsversorgungseinheiten (4, 5, 6, 7) so verschaltet sind,
• dass von dem ersten Subenergiemodul (2) und/oder von dem zweiten Subenergiemodul (3) an einem ersten Anschlusspunkt (12) und/oder an einem zweiten Anschlusspunkt (13) der Zweispannungsbatterie (1) die erste Spannung bereitgestellt wird und
• dass von dem ersten Subenergiemodul (2) und/oder von dem zweiten Subenergiemodul (3) an einem dritten Anschlusspunkt (14) und/oder an einem vierten Anschlusspunkt (15) der Zweispannungsbatterie (1) die zweite Spannung bereitgestellt wird,
**dadurch gekennzeichnet, dass**
zwischen dem ersten Subenergiemodul (2) und dem zweiten Subenergiemodul (3)
• ein erster Modultrennschalter (10) für eine die erste Spannung aufweisende erste Leitung (8) zwischen dem ersten Anschlusspunkt (12) und dem zweiten Anschlusspunkt (13) und/oder
• ein zweiter Modultrennschalter (11) für eine die zweite Spannung aufweisende zweite Leitung (9) zwischen dem dritten Anschlusspunkt (14) und dem vierten Anschlusspunkt (15) vorgesehen sind,
• wobei in einem Normalbetriebszustand die Modultrennschalter (10,11) geschlossen sind zum Verbinden der Subenergiemodule (2, 3) und
• wobei in einem Notbetriebszustand der Zweispannungsbatterie (1) wenigstens ein Modultrennschalter (10,11) geöffnet ist.

2. Zweispannungsbatterie (1) nach Anspruch 1, **dadurch gekennzeichnet, dass** in der ersten Verbindungsanordnung und/oder in der zweiten Verbindungsanordnung von der ersten Spannungsversorgungseinheit (4) und von der zweiten Spannungsversorgungseinheit (5) die erste Spannung bereitgestellt ist.

3. Zweispannungsbatterie (1) nach Anspruch 1 oder 2, **dadurch gekennzeichnet, dass** durch die dritte Spannungsversorgungseinheit (6) und durch die vierte Spannungsversorgungseinheit (7) in der ersten Verbindungsanordnung die erste Spannung und/oder in der zweiten Verbindungsanordnung die zweite Spannung bereitgestellt sind.

4. Zweispannungsbatterie (1) nach einem der Ansprüche 1 bis 3, **dadurch gekennzeichnet, dass** die erste Spannungsversorgungseinheit (4) und/oder die zweite Spannungsversorgungseinheit (5) genau einen Batteriezellblock (C, D, E1, F1) umfassen.

5. Zweispannungsbatterie (1) nach einem der Ansprüche 1 bis 4, **dadurch gekennzeichnet, dass** die dritte Spannungsversorgungseinheit (6) und/oder die vierte Spannungsversorgungseinheit (7) drei Batteriezellblöcke (A1, A2, A3, B1, B2, B3, E1, E2, E3, F1, F2, F3) umfassen, wobei die drei Batteriezellblöcke (A1, A2, A3, B1, B2, B3, E1, E2, E3, F1, F2, F3) der dritten Spannungsversorgungseinheit (6) und/oder der vierten Spannungsversorgungseinheit (7) intern wahlweise parallel und/oder seriell verschaltet vorgesehen sind.

6. Zweispannungsbatterie (1) nach einem der Ansprüche 1 bis 5, **dadurch gekennzeichnet, dass** alle Batteriezellblöcke (A1, A2, A3, B1, B2, B3, C, C1, C2, D, D1, D2, E1, E2, E3, F1, F2, F3) baugleich ausgeführt sind.

7. Zweispannungsbatterie (1) nach einem der Ansprüche 1 bis 6, **dadurch gekennzeichnet, dass** für das erste Subenergiemodul (2) und für das zweite Subenergiemodul (3) getrennte Gehäuse (25, 26) vorgesehen sind.

8. Zweispannungsbatterie (1) nach einem der Ansprüche 1 bis 6, **dadurch gekennzeichnet, dass** das erste Subenergiemodul (2) und das zweite Subenergiemodul (3) in einem gemeinsamen Gehäuse (24) vorgesehen sind.

9. Zweispannungsbatterie (1) nach einem der Ansprüche 1 bis 8, **dadurch gekennzeichnet, dass** für das erste Subenergiemodul (2) und für das zweite Subenergiemodul (3) ein gemeinsamer Massepunkt vorgesehen ist.

10. Zweispannungsbatterie (1) nach einem der Ansprüche 1 bis 8, **dadurch gekennzeichnet, dass** getrennte Massepunkte (20, 21) für das erste Subenergiemodul (2) und für das zweite Subenergiemodul (3) vorgesehen sind.

11. Zweispannungsbatterie (1) nach einem der Ansprüche 1 bis 10, **dadurch gekennzeichnet, dass** die Modultrennschalter (10, 11) außerhalb des wenigstens einen Gehäuses (24, 25, 26) der Subenergiemodule (2, 3) angeordnet sind.

12. Zweispannungsbatterie (1) nach einem der Ansprüche 1 bis 10, **dadurch gekennzeichnet, dass** die Modultrennschalter (10, 11) innerhalb des wenigstens einen Gehäuses (24, 25, 26) der Subenergiemodule (2, 3) angeordnet sind.

13. Zweispannungsbatterie (1) nach einem der Ansprüche 1 bis 12, **dadurch gekennzeichnet, dass** zwischen jedenfalls einzelnen Anschlusspunkten (12, 13, 14, 15) und den Subenergiemodulen (2, 3) Sicherungstrennschalter (27, 28, 29, 30) vorgesehen sind, wobei in einer Schließstellung der Sicherungstrennschalter (27, 28, 29, 30) der dem jeweiligen Anschlusspunkt (12, 13, 14, 15) zugeordnete elektrische Verbraucher (16, 17, 18, 19) verbunden ist und wobei in einer Öffnungsstellung der Sicherungstrennschalter (27, 28, 29, 30) der dem jeweiligen Anschlusspunkt (12, 13, 14, 15) zugeordnete elektrische Verbraucher (16, 17, 18, 19) getrennt ist.

14. Zweispannungsbatterie (1) nach einem der Ansprüche 1 bis 13, **dadurch gekennzeichnet, dass** für die erste Spannungsversorgungseinheit (4) und die zweite Spannungsversorgungseinheit (5) und die dritte Spannungsversorgungseinheit (6) und die vierte Spannungsversorgungseinheit (7) ein gemeinsamer Anschlusspunkt (12) vorgesehen ist und/oder dass für die dritte Spannungsversorgungseinheit (6) und für die vierte Spannungsversorgungseinheit (7) ein gemeinsamer Anschlusspunkt (14) vorgesehen ist.

15. Zweispannungsbatterie (1) nach einem der Ansprüche 1 bis 14, **dadurch gekennzeichnet, dass** für das erste Subenergiemodul (2) und für das zweite Subenergiemodul (3) ein gemeinsamer Massepunkt (20) vorgesehen ist.

16. Zweispannungsbatterie (1) nach einem der Ansprüche 1 bis 15, **dadurch gekennzeichnet, dass** zwischen der ersten Spannungsversorgungseinheit (4) und/oder der zweiten Spannungsversorgungseinheit (5) einerseits und der dritten Spannungsversorgungseinheit (6) und/oder der vierten Spannungsversorgungseinheit (7) andererseits ein DC/DC-Wandler vorgesehen ist zum Wandeln der ersten Spannung in die zweite Spannung und/oder zum Wandeln der zweiten Spannung in die erste Spannung.

17. Zweispannungsbatterie (1) nach einem der Ansprüche 1 bis 16, **dadurch gekennzeichnet, dass** die erste Spannungsversorgungseinheit (4) und/oder die zweite Spannungsversorgungseinheit (5) und/oder die dritte Spannungsversorgungseinheit (6) und/oder die vierte Spannungsversorgungseinheit (7) zwei Batteriezellblöcke (A1, A2, B1, B2, C1, C2, D1, D2) aufweist, wobei die Batteriezellblöcke (A1, A2, B1, B2, C1, C2, D1, D2) der ersten und/oder der zweiten und/oder der dritten und/oder der vierten Spannungsversorgungseinheit (4, 5, 6, 7) mittels der Leistungsschaltelementen (P1+, P1-, P2+, P2-, S1, S2, S3) wahlweise in eine serielle und in eine parallele Schaltstellung verbringbar sind.

## Claims

1. Dual-voltage battery (1) for a vehicle (23)
• comprising a plurality of battery cells, wherein in each case a group of battery cells is connected to form a battery cell block (A1, A2, A3, B1, B2, B3, C, C1, C2, D, D1, D2, E1, E2, E3, F1, F2, F3), and
• comprising battery electronics having a plurality of power switching elements (P1+, P1-, P2+, P2-, P3+, P3-, S1, S2, S3) for connecting in each case individual battery cell blocks (A1, A2, A3, B1, B2, B3, C, C1, C2, D, D1, D2, E1, E2, E3, F1, F2, F3) in series and/or in parallel,
• wherein a first voltage is provided in a first connection arrangement of the battery cell blocks (A1, A2, A3, B1, B2, B3, C, C1, C2, D, D1, D2, E1, E2, E3, F1, F2, F3) and
• wherein a second voltage is provided in a second connection arrangement of the battery cell blocks (A1, A2, A3, B1, B2, B3, C, C1, C2, D, D1, D2, E1, E2, E3, F1, F2, F3),
wherein
• at least one first battery cell block (C, C1, C2, F1) is provided as part of a first voltage supply unit (4) and
• at least one second battery cell block (D, D1, D2, E1) is provided as part of a second voltage supply unit (5) and
• at least two third battery cell blocks (B1, B2, B3, F1, F2, F3) are provided as part of a third voltage supply unit (6) and
• at least two fourth battery cell blocks (A1, A2, A3, E1, E2, E3) are provided as part of a fourth voltage supply unit (7),
wherein
• the first voltage supply unit (4) and the third voltage supply unit (6) form a first energy submodule (2) and
• the second voltage supply unit (5) and the fourth voltage supply unit (7) form a second energy submodule (3) and
wherein the voltage supply units (4, 5, 6, 7) are interconnected in such a way
• that the first voltage is provided at a first terminal point (12) and/or at a second terminal point (13) of the dual-voltage battery (1) by the first energy submodule (2) and/or by the second energy submodule (3), and
• that the second voltage is provided at a third terminal point (14) and/or at a fourth terminal point (15) of the dual-voltage battery (1) by the first energy submodule (2) and/or by the second energy submodule (3),
**characterized in that**
between the first energy submodule (2) and the second energy submodule (3)
• a first module circuit breaker (10) for a first line (8), having the first voltage, is provided between the first terminal point (12) and the second terminal point (13) and/or
• a second module circuit breaker (11) for a second line (9), having the second voltage, is provided between the third terminal point (14) and the fourth terminal point (15)
• wherein, in a normal operating state, the module circuit breakers (10, 11) are closed for connecting the energy submodules (2, 3) and
• wherein, in an emergency operating state of the dual-voltage battery (1), at least one module circuit breaker (10, 11) is open.

2. Dual-voltage battery (1) according to claim 1, **characterized in that** the first voltage is provided by the first voltage supply unit (4) and by the second voltage supply unit (5) in the first connection arrangement and/or in the second connection arrangement.

3. Dual-voltage battery (1) according to claim 1 or 2, **characterized in that** the first voltage is provided in the first connection arrangement and/or the second voltage is provided in the second connection arrangement by the third voltage supply unit (6) and by the fourth voltage supply unit (7).

4. Dual-voltage battery (1) according to one of claims 1 to 3, **characterized in that** the first voltage supply unit (4) and/or the second voltage supply unit (5) comprise precisely one battery cell block (C, D, E1, F1).

5. Dual-voltage battery (1) according to one of claims 1 to 4, **characterized in that** the third voltage supply unit (6) and/or the fourth voltage supply unit (7) comprise three battery cell blocks (A1, A2, A3, B1, B2, B3, E1, E2, E3, F1, F2, F3), wherein the three battery cell blocks (A1, A2, A3, B1, B2, B3, E1, E2, E3, F1, F2, F3) of the third voltage supply unit (6) and/or the fourth voltage supply unit (7) are provided so as to be internally interconnected selectively in parallel and/or in series.

6. Dual-voltage battery (1) according to one of claims 1 to 5, **characterized in that** all the battery cell blocks (A1, A2, A3, B1, B2, B3, C, C1, C2, D, D1, D2, E1, E2, E3, F1, F2, F3) are of the same structural design.

7. Dual-voltage battery (1) according to one of claims 1 to 6, **characterized in that** separate housings (25, 26) are provided for the first energy submodule (2) and for the second energy submodule (3).

8. Dual-voltage battery (1) according to one of claims 1 to 6, **characterized in that** the first energy submodule (2) and the second energy submodule (3) are provided in a common housing (24).

9. Dual-voltage battery (1) according to one of claims 1 to 8, **characterized in that** a common earth point is provided for the first energy submodule (2) and for the second energy submodule (3).

10. Dual-voltage battery (1) according to one of claims 1 to 8, **characterized in that** separate earth points (20, 21) are provided for the first energy submodule (2) and for the second energy submodule (3).

11. Dual-voltage battery (1) according to one of claims 1 to 10, **characterized in that** the module circuit breakers (10, 11) are arranged outside of the at least one housing (24, 25, 26) of the energy submodules (2, 3).

12. Dual-voltage battery (1) according to one of claims 1 to 10, **characterized in that** the module circuit breakers (10, 11) are arranged within the at least one housing (24, 25, 26) of the energy submodules (2, 3).

13. Dual-voltage battery (1) according to one of claims 1 to 12, **characterized in that** safety circuit breakers (27, 28, 29, 30) are provided between in each case individual terminal points (12, 13, 14, 15) and the energy submodules (2, 3), wherein, in a closed position of the safety circuit breakers (27, 28, 29, 30), the electrical load (16, 17, 18, 19) assigned to the respective terminal point (12, 13, 14, 15) is connected, and wherein, in an open position of the safety circuit breakers (27, 28, 29, 30), the electrical load (16, 17, 18, 19) assigned to the respective terminal point (12, 13, 14, 15) is disconnected.

14. Dual-voltage battery (1) according to one of claims 1 to 13, **characterized in that** a common terminal point (12) is provided for the first voltage supply unit (4) and the second voltage supply unit (5) and the third voltage supply unit (6) and the fourth voltage supply unit (7) and/or **in that** a common terminal point (14) is provided for the third voltage supply unit (6) and for the fourth voltage supply unit (7).

15. Dual-voltage battery (1) according to one of claims 1 to 14, **characterized in that** a common earth point (20) is provided for the first energy submodule (2) and for the second energy submodule (3).

16. Dual-voltage battery (1) according to one of claims 1 to 15, **characterized in that** a DC-DC converter is provided between the first voltage supply unit (4) and/or the second voltage supply unit (5), on the one hand, and the third voltage supply unit (6) and/or the fourth voltage supply unit (7), on the other hand, for converting the first voltage into the second voltage and/or for converting the second voltage into the first voltage.

17. Dual-voltage battery (1) according to one of claims 1 to 16, **characterized in that** the first voltage supply unit (4) and/or the second voltage supply unit (5) and/or the third voltage supply unit (6) and/or the fourth voltage supply unit (7) has two battery cell blocks (A1, A2, B1, B2, C1, C2, D1, D2), wherein the battery cell blocks (A1, A2, B1, B2, C1, C2, D1, D2) of the first and/or the second and/or the third and/or the fourth voltage supply unit (4, 5, 6, 7) can be selectively brought into a series and into a parallel switching position by means of the power switching elements (P1+, P1-, P2+, P2-, S1, S2, S3).

## Revendications

1. Batterie bitension (1) pour un véhicule (23)
• comprenant une pluralité de cellules de batterie, respectivement un groupe de cellules de batterie étant relié en bloc de cellules de batterie (A1, A2, A3, B1, B2, B3, C, C1, C2, D, D1, D2, E1, E2, E3, F1, F2, F3), et
• comprenant une électronique de batterie avec une pluralité d'éléments de commutation de puissance (P1+, P1-, P2+, P2-, P3+, P3-, S1, S2, S3) pour relier en série et/ou en parallèle du moins des blocs de cellules de batterie individuels (A1, A2, A3, B1, B2, B3, C, C1, C2, D, D1, D2, E1, E2, E3, F1, F2, F3),
• une première tension étant fournie dans un premier agencement de liaison des blocs de cellules de batterie (A1, A2, A3, B1, B2, B3, C, C1, C2, D, D1, D2, E1, E2, E3, F1, F2, F3), et
• une deuxième tension étant fournie dans un deuxième agencement de liaison des blocs de cellules de batterie (A1, A2, A3, B1, B2, B3, C, C1, C2, D, D1, D2, E1, E2, E3, F1, F2, F3),
dans laquelle
• au moins un premier bloc de cellules de batterie (C, C1, C2, F1) est prévu comme une partie d'une première unité d'alimentation en tension (4), et
• au moins un deuxième bloc de cellules de batterie (D, D1, D2, E1) est prévu comme une partie d'une deuxième unité d'alimentation en tension (5), et
• au moins deux troisièmes blocs de cellules de batterie (B1, B2, B3, F1, F2, F3) sont prévus comme une partie d'une troisième unité d'alimentation en tension (6), et
• au moins deux quatrièmes blocs de cellules de batterie (A1, A2, A3, E1, E2, E3) sont prévus comme une partie d'une quatrième unité d'alimentation en tension (7),
dans laquelle
• la première unité d'alimentation en tension (4) et la troisième unité d'alimentation en tension (6) constituent un premier sous-module d'énergie (2), et
• la deuxième unité d'alimentation en tension (5) et la quatrième unité d'alimentation en tension (7) constituent un deuxième sous-module d'énergie (3), et
dans laquelle les unités d'alimentation en tension (4, 5, 6, 7) sont câblées de telle sorte que
• le premier sous-module d'énergie (2) et/ou le deuxième sous-module d'énergie (3) fournissent la première tension en un premier point de connexion (12) et/ou en un deuxième point de connexion (13) de la batterie bitension (1), et
• le premier sous-module d'énergie (2) et/ou le deuxième sous-module d'énergie (3) fournissent la deuxième tension en un troisième point de connexion (14) et/ou en un quatrième point de connexion (15) de la batterie bitension (1),
**caractérisée en ce qu'**entre le premier sous-module d'énergie (2) et le deuxième sous-module d'énergie (3)
• un premier disjoncteur de module (10) est prévu pour une première ligne (8) présentant la première tension entre le premier point de connexion (12) et le deuxième point de connexion (13), et/ou
• un deuxième disjoncteur de module (11) est prévu pour une deuxième ligne (9) présentant la deuxième tension entre le troisième point de connexion (14) et le quatrième point de connexion (15),
• dans laquelle, dans un état de fonctionnement normal, les disjoncteurs de module (10, 11) sont fermés pour relier les sous-modules d'énergie (2, 3), et
• dans laquelle, dans un état de fonctionnement de secours de la batterie bitension (1), au moins un disjoncteur de module (10, 11) est ouvert.

2. Batterie bitension (1) selon la revendication 1, **caractérisée en ce que** dans le premier agencement de liaison et/ou dans le deuxième agencement de liaison, la première unité d'alimentation en tension (4) et la deuxième unité d'alimentation en tension (5) fournissent la première tension.

3. Batterie bitension (1) selon la revendication 1 ou 2, **caractérisée en ce que** la troisième unité d'alimentation en tension (6) et la quatrième unité d'alimentation en tension (7) fournissent la première tension dans le premier agencement de liaison et/ou fournissent la deuxième tension dans le deuxième agencement de liaison.

4. Batterie bitension (1) selon l'une quelconque des revendications 1 à 3, **caractérisée en ce que** la première unité d'alimentation en tension (4) et/ou la deuxième unité d'alimentation en tension (5) comprennent exactement un bloc de cellules de batterie (C, D, E1, F1).

5. Batterie bitension (1) selon l'une quelconque des revendications 1 à 4, **caractérisée en ce que** la troisième unité d'alimentation en tension (6) et/ou la quatrième unité d'alimentation en tension (7) comprennent trois blocs de cellules de batterie (A1, A2, A3, B1, B2, B3, E1, E2, E3, F1, F2, F3), les trois blocs de cellules de batterie (A1, A2, A3, B1, B2, B3, E1, E2, E3, F1, F2, F3) de la troisième unité d'alimentation en tension (6) et/ou de la quatrième unité d'alimentation en tension (7) étant prévus en interne en étant au choix connectés en parallèle et/ou en série.

6. Batterie bitension (1) selon l'une quelconque des revendications 1 à 5, **caractérisée en ce que** tous les blocs de cellules de batterie (A1, A2, A3, B1, B2, B3, C, C1, C2, D, D1, D2, E1, E2, E3, F1, F2, F3) sont de construction identique.

7. Batterie bitension (1) selon l'une quelconque des revendications 1 à 6, **caractérisée en ce que** pour le premier sous-module d'énergie (2) et pour le deuxième sous-module d'énergie (3), des boîtiers séparés (25, 26) sont prévus.

8. Batterie bitension (1) selon l'une quelconque des revendications 1 à 6, **caractérisée en ce que** le premier sous-module d'énergie (2) et le deuxième sous-module d'énergie (3) sont prévus dans un boîtier (24) commun.

9. Batterie bitension (1) selon l'une quelconque des revendications 1 à 8, **caractérisée en ce que** pour le premier sous-module d'énergie (2) et pour le deuxième sous-module d'énergie (3), un point de mise à la terre commun est prévu.

10. Batterie bitension (1) selon l'une quelconque des revendications 1 à 8, **caractérisée en ce que** des points de mise à la terre séparés (20, 21) sont prévus pour le premier sous-module d'énergie (2) et pour le deuxième sous-module d'énergie (3).

11. Batterie bitension (1) selon l'une quelconque des revendications 1 à 10, **caractérisée en ce que** les disjoncteurs de module (10, 11) sont disposés à l'extérieur de l'au moins un boîtier (24, 25, 26) des sous-modules d'énergie (2, 3).

12. Batterie bitension (1) selon l'une quelconque des revendications 1 à 10, **caractérisée en ce que** les disjoncteurs de module (10, 11) sont disposés à l'intérieur de l'au moins un boîtier (24, 25, 26) des sous-modules d'énergie (2, 3).

13. Batterie bitension (1) selon l'une quelconque des revendications 1 à 12, **caractérisée en ce que** du moins entre des points de connexion individuels (12, 13, 14, 15) et les sous-modules d'énergie (2, 3), des disjoncteurs de sécurité (27, 28, 29, 30) sont prévus, dans laquelle, dans une position de fermeture des disjoncteurs de sécurité (27, 28, 29, 30), le consommateur électrique (16, 17, 18, 19) associé au point de connexion (12, 13, 14, 15) respectif est relié, et dans laquelle, dans une position d'ouverture des disjoncteurs de sécurité (27, 28, 29, 30), le consommateur électrique (16, 17, 18, 19) associé au point de connexion (12, 13, 14, 15) respectif est déconnecté.

14. Batterie bitension (1) selon l'une quelconque des revendications 1 à 13, **caractérisée en ce que** pour la première unité d'alimentation en tension (4) et la deuxième unité d'alimentation en tension (5) et la troisième unité d'alimentation en tension (6) et la quatrième unité d'alimentation en tension (7), un point de connexion commun (12) est prévu, et/ou **en ce que** pour la troisième unité d'alimentation en tension (6) et pour la quatrième unité d'alimentation en tension (7) un point de connexion commun (14) est prévu.

15. Batterie bitension (1) selon l'une quelconque des revendications 1 à 14, **caractérisée en ce qu'**un point de mise à la terre commun (20) est prévu pour le premier sous-module d'énergie (2) et pour le deuxième sous-module d'énergie (3).

16. Batterie bitension (1) selon l'une quelconque des revendications 1 à 15, **caractérisée en ce qu'**entre la première unité d'alimentation en tension (4) et/ou la deuxième unité d'alimentation en tension (5) d'une part et la troisième unité d'alimentation en tension (6) et/ou la quatrième unité d'alimentation en tension (7) d'autre part, un convertisseur CC/CA est prévu pour convertir la première tension en deuxième tension et/ou pour convertir la deuxième tension en première tension.

17. Batterie bitension (1) selon l'une quelconque des revendications 1 à 16, **caractérisée en ce que** la première unité d'alimentation en tension (4) et/ou la deuxième unité d'alimentation en tension (5) et/ou la troisième unité d'alimentation en tension (6) et/ou la quatrième unité d'alimentation en tension (7) présentent deux blocs de cellules de batterie (A1, A2, B1, B2, C1, C2, D1, D2), les blocs de cellules de batterie (A1, A2, B1, B2, C1, C2, D1, D2) de la première et/ou de la deuxième et/ou de la troisième et/ou de la quatrième unité d'alimentation en tension (4, 5, 6, 7) pouvant au choix être mis en connexion série et en connexion parallèle au moyen de l'élément de commutation de puissance (P1+, P1-, P2+, P2-, S1, S2, S3).
